# EUROPEAN PATENT SPECIFICATION

(11) **EP 2 326 557 B1**
(45) Date of publication and mention of the grant of the patent: **08.02.2012**
(21) Application number: 09784970.7
(22) Date of filing: 20.08.2009
(51) Int. Cl.: B65B 5/10, B65B 25/20, B65B 63/02, B65B 67/04, B65G 57/00

(54) **PACKING OF BOXED GLOVES**
VERPACKEN VON HANDSCHUHEN IN SCHACHTELN
EMBALLAGE DE GANTS DANS UNE BOITE

(30) Priority: 20.08.2008 GB 0815156; 30.03.2009 GB 0905483
(43) Date of publication of application: 01.06.2011
(73) Proprietor: Altevo Limited, Woodbridge IP13 9EZ (GB)
(72) Inventor: STOLLERY, Jonathan, William, Framlingham Woodbridge IP13 9TE (GB); JONES, Kim, Marie, Framlingham Woodbridge IP13 9TE (GB)
(74) Representative: McLean, Robert Andreas
(86) International application number: PCT/GB2009/002033
(87) International publication number: WO 2010/020782

(56) References cited:
- GB-A- 2 245 879
- GB-A- 2 420 107

## Description

The present invention relates to a glove packing apparatus for packing gloves into a box, and to a method of packing gloves into a box, particularly to the packing of disposable medical gloves.

### b. Related Art

The control of infection of patients in hospitals, clinics, and doctors' surgeries has become an ever more pressing concern with the rise of infectious bacteria resistant to multiple antibiotics, in particular methicillin-resistant staphylococcus aureus (MRSA) and Clostridium dificile (C. dificile). In the United Kingdom alone there are thought to be about 5,000 deaths a year from infections caught in hospitals but some experts believe the number could be as high as 20,000.

Disposable medical gloves can help prevent cross-contamination, but a problem arises if external parts of the glove touch the same areas of a dispensing container as have previously been touched by hands which are contaminated with harmful micro-organisms. Such external parts of the gloves can then become contaminated prior to contact with a patient, if these external parts are the fingers or palm area of the glove the likelihood of a patient being contaminated is dramatically increased.

Most gloves used in hospitals and clinics are examination gloves, and these are used in large numbers. Such gloves are supplied not in individual sterile packages, but in relatively inexpensive cardboard dispensing boxes. The size of boxed gloves is an issue owing to the need to minimise the space needed to store gloves, or the size of dispensing apparatus holding boxed gloves.

Because of the enhanced infection control properties the preferred method of dispensing these gloves is by the cuff, so that the user can only remove the gloves from the container by the cuffs rather than by the fingers etc. However in order to remove the gloves by the cuff there is a danger that the users hands will contaminate the edges of the area of the box through which the gloves have to pass, increasing the possibility that any contamination on the hands of the user can then be transferred to the gloves if they touch these areas when removing them from the container.

Prior art document GB 2420107 A discloses a system and method for packing cotton sliver having a receptacle that has a floor on which a pile of products have been stacked from the bottom to the top.

It is an object of the present invention to provide a means by which during removal of the gloves from the container, the gloves can be prevented from contact with the areas which could have been previously contaminated by user's hands.

It is also an object of the present invention to reduce the packing volume of boxed gloves.

### SUMMARY OF THE INVENTION

According to the invention, there is provided a glove packing apparatus for packing gloves into a box, the apparatus comprising a receptacle for forming a stack of said gloves to be packed, the receptacle having:
- a perimeter wall for containing said stack of gloves;
- a floor within the perimeter wall for supporting said stack of gloves; and
- an opening opposite the floor into which additional gloves may be added to said stack of gloves;
   characterised in that the floor is movable relative to the perimeter wall, so that, in use:
- the floor may be moved relatively away from said opening so that as gloves are added to said stack of gloves, the perimeter wall continues to contain the stack of gloves; and
- the floor may be moved relatively toward said opening to remove the stack of gloves from the receptacle.

The box may be formed from any suitable material, for example single layer cardboard, stiff paper, or plastic sheet material.

The stack of gloves may be formed manually or automatically, for example by inserting one or more gloves at a time through the opening to build up a stack of gloves supported by the receptacle floor. The perimeter wall can therefore help to define and control the shape of the stack of gloves as this is built up, and ultimately, this will help to ensure that the stack is uniform, with the material of each glove spread out evenly with minimal high spots. Because the floor is moved away from the opening as the stack is built up, the packing operative or packing machine need not reach into the receptacle, but can orient gloves correctly on preceding gloves in the stack, all the while working near the level of the opening to the receptacle. As the stack is built up, the floor is moved away form the opening, so that the working height of the stack continues to be readily accessible but not protruding at any time significantly above the level of the opening. All the while, the perimeter wall continues to stabilise the stack from tipping, while preferably ensuring that the side walls of the stack are, on average straight and parallel with each other.

In a preferred embodiment of the invention, the perimeter wall is fixed and the floor is movable towards and away from the opening. It would, however, alternatively be possible to have the floor fixed, with the perimeter wall being the movable component of the apparatus.

Also in a preferred embodiment of the invention, the floor is an upper surface of a substantially rectangular or square piston that moves within a similarly shaped piston bore.

The receptacle may be inset beneath a surface, for example a worktop that extends around the opening. This can help with the manual sorting and alignment of gloves on the surrounding surface, which can then be easily moved across the surface and into the receptacle. The surface may also help with automatic placement of gloves in the receptacle.

The receptacle will in general have a volume that has a shape that mirrors the internal volume of the box in which the gloves are to be packed. Therefore, it will usually be the case that the perimeter wall extends substantially vertically upwards from the base. The perimeter wall may, however, be discontinuous, as long as this does not adversely affect the containment of the gloves stacked in the receptacle.

In a preferred embodiment of the invention, the perimeter wall has at least one slot, and the apparatus comprises additionally a packing plate adapted to rest on the floor of the receptacle. The packing plate is fixed to an extending member that extends through one slot in the perimeter wall. The extending member then can be used to lift or otherwise remove the packing plate from the receptacle when the stack of gloves is complete and ready to be transferred to a box.

To help locate the packing plate correctly on the base, the base may have at least one raised feature in a surface of the base. In a preferred embodiment of the invention, the base has around the perimeter edge, at least one raised feature for locating with one or more corresponding external edges of the packing plate.

Also according to the invention, there is provided a method of packing gloves in a box using a glove packing apparatus, the apparatus comprising a receptacle having an opening and a floor opposite and relatively movable with respect to the opening, the method comprising the steps of:
- inserting gloves one or more at a time through the opening and into the receptacle to build a stack of gloves that are supported by the floor;
   characterised in that the method comprises the steps of
- moving the floor as necessary away from the opening so that the stack of gloves is contained by the receptacle;
- when the stack of gloves is complete, moving the floor relatively toward said opening and transferring the stack of gloves into said box.

The building of the stack of gloves is facilitated by first moving the floor towards the opening to gain more ready access to the stack of gloves and then as gloves are added to stack, moving the floor away from the opening so that the stack of gloves is contained by the receptacle.

The open end of the box in which gloves are to be packed can then be oriented so that this is faces the opening to the receptacle. Optionally, the open end of the box may slot over the outside of the perimeter wall, which can take the form of an extending sleeve. In either case, the receptacle floor can then be moved towards the receptacle opening to move the stack of gloves into the open end of the box.

The box can then be removed from the opening to the receptacle, while at the same time continuing to hold the stack of gloves inside the box. After the box has been removed from the apparatus, the box can be closed, for example by folding flaps over the box opening.

When the apparatus comprises a packing plate that has an extending member, the first step, prior to inserting any gloves through the opening, is to place the packing plate on the movable floor, with the extending member extending externally of the receptacle. Then, when the stack of gloves is ready to be transferred to the box, the extending member can be used to help transfer the stack of gloves into the box. During this process, the packing plate is particularly useful in helping to maintain and compress the gloves fully inside the box.

The open box may have one or more flaps that are moved to close the open end of the box. At least one of these flaps may then be closed while leaving the packing plate in place with respect to said stack of gloves. This helps to compress and contain the gloves in the box until the box can be closed. After at least one flap has been closed, the packing plate can then be removed from the stack of gloves.

In a preferred embodiment of the invention, the apparatus comprises additionally a packing element, the packing element having a lower coefficient of friction than the gloves to be packed. The packing element is then used to cover the packing plate prior to inserting any gloves through the opening, following which the stack of gloves is formed directly on the packing element. The packing element then provides a buffer between the packing plate and the stack of gloves so that the packing plate can slide out of the box without sticking on or dislodging in any way the topmost glove in the stack.

Also described herein is a compression plate for maintaining the alignment of a stack of gloves inside a container, the compression plate comprising a first member and a second member, and a biasing means, said members being joined at a first fold line between said members, wherein:
- the first member has a second fold line that divides the first member in a first segment and a second segment;
- each of said segments is pulled together by the biasing means so that said segments have a tendency to flex along the second fold line and away from the second member.

The first and second members may have corresponding cut outs in the vicinity of the first fold line, said cut outs at least partially overlapping to permit, in use, gloves to the dispensed through the cut outs.

The biasing means, which may be an elastic band, may engage with engagement features in both the first and second segments of the first member, for example being provided in side edges of the first and second segments.

The first and/or second members are preferably formed from sheet material, for example cardboard, stiff paper or plastic sheet material.

### BRIEF DESCRIPTION OF THE DRAWINGS

The invention will now be further described, by way of example only, and with reference to the accompanying drawings, in which:
Figure 1 shows in perspective a view from above and to one side of a glove packing apparatus according to a first preferred embodiment of the invention, having a packing sleeve having an internal perimeter wall surface and a movable base which together form a packing receptacle, and a packing plate and a packing element that inserts into the packing receptacle;
Figure 2 shows in perspective a view from above and to one side of the movable base of Figure 1;
Figure 3 shows the packing apparatus of Figure 1 when the packing receptacle is packed full with a stack of gloves;
Figure 4 shows a box-like receptacle for receiving a packing box into which the stack of gloves is to be packed
Figure 5 shows the packing apparatus of Figure 3 when the box-like receptacle is placed over the open end of the packing sleeve;
Figure 6 shows the packing box when removed from the packing sleeve, and with the packing plate and packing element being used to maintain the stack of gloves under compression inside the box;
Figure 7 shows how two side flaps of the packing box are first folded over the packing plate;
Figure 8 shows how the packing plate is removed from the box, with the packing element left in place inside the box;
Figure 9 shows how two end flaps are folded over the side flaps to close the box fully;
Figure 10 shows in perspective a view from above and to one side of a glove packing apparatus according to a second preferred embodiment of the invention, having a square packing sleeve partially set into a surrounding work surface;
Figure 11 shows the glove packing apparatus of Figure 10, after a packing plate and a packing element have been inserted into the packing receptacle, with tabs of the packing element rising up the walls of the receptacle;
Figure 12 shows how the packing element remains in a box packed full of gloves;
Figure 13 shows in perspective a view from above and to one side of a glove packing apparatus according to a third preferred embodiment of the invention, having a square packing sleeve that is slotted flush into a work surface;
Figure 14 shows in perspective a view from above and to one side of a compression plate for maintaining compression of the stack of gloves within the box; and
Figure 15 shows a view from beneath of the compression plate of Figure 14.

### DETAILED DESCRIPTION

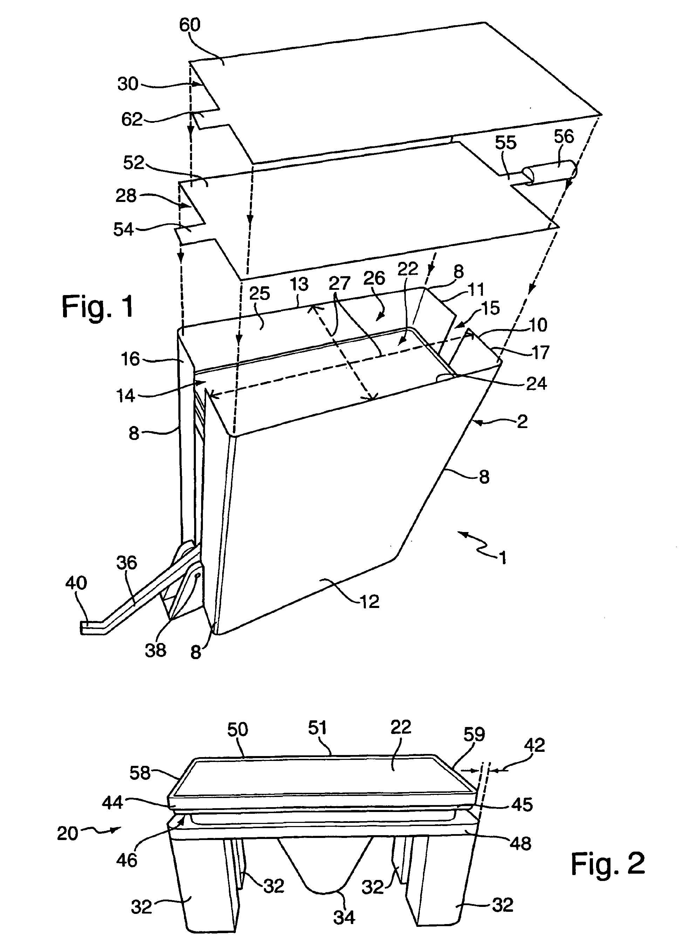

Figure 1 shows a first embodiment of a glove packing apparatus 1, having a packing sleeve 2, a packing plate 28 and a packing element 30. The packing sleeve 2 extends vertically and has a rectangular horizontal cross-section with rounded corners 8. The sleeve is formed in two halves 10, 11, each of which has the same shape, being formed from folded sheet metal, preferably stainless steel. Each sleeve half 10, 11 has a square C-shape in a horizontal cross-section and extends fully on long sides 12, 13 of the packing sleeve 2. The sleeve halves 10, 11 are separated by a vertically extending gap 14, 15 along the centre of short sides 16, 17 of the sleeve 2.

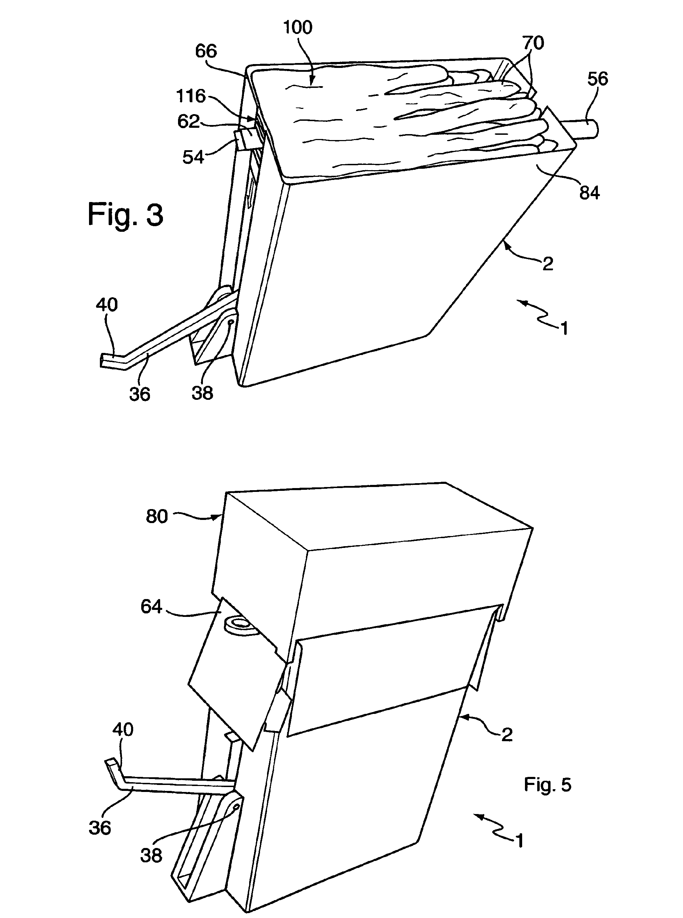

The packing sleeve 2 contains a movable base 20 that provides a floor surface 22. The floor 22 and internal wall surfaces 24, 25 provided by the sleeve halves 10, 11 define a packing receptacle 26 for receiving a stack of gloves 100 to be packed by the apparatus 1, as shown in Figure 3. The internal wall surfaces 24, 25 therefore extend around the periphery of the packing receptacle 26, which has an opening 27 also bounded by the perimeter wall surfaces 24, 25.

The apparatus preferably includes a steel packing plate 28 and a non-woven fabric packing element 30 that are first inserted into the packing receptacle 26. The function of these will be described below.

The base 20 is shown in more detail in Figure 2. The base is preferably formed as a unitary plastic moulding and has four downwardly extending legs 32 that are shaped to make a close sliding fit with the interior wall surfaces 24, 25 in the vicinity of the sleeve corners 8. Between the legs is a fulcrum 34 which is connected to one end of a lever arm 36. The lever extends from the fulcrum 34 though a first one 14 of the slots in the perimeter wall 24, 25 another end of which can be seen in Figure 1. The lever 36, which is manually operated, pivots about a pivot 38 fixed externally of the sleeve halves 10, 11. When a lever handle 40 at the end of the lever arm 36 is moved up and down, the base 20 then moves correspondingly down and up.

The floor 22 of the base 20 has the same rectangular shape as the sleeve cross-section, but is smaller in both length and width to provide a clear gap 42 between base 20 and the perimeter wall 24, 25. The gap is defined by a rectangular strip 44 that extends downwardly from the floor 22 of the base 20. A lower edge 45 of the strip terminates at an under hanging surface 46 such that the dimension of the gap 42 is increased beneath the strip lower edge 45. The base floor 22 proximate the perimeter edge 51 therefore extends above an overhang feature 44, 45, 46 in the base 20.

At a distance beneath the strip lower edge 45 at least equal to the width of the rectangular strip 44, the base has a rectangular platform 48 with a rectangular outer profile that matches the shape of the perimeter wall surfaces 24, 25 so that the base platform makes a close sliding fit with these perimeter wall surfaces. The legs 32 and fulcrum 34 then extend downwardly from the base platform 48. The contact between the base platform 48 and legs 32, on the one hand, and the perimeter wall 24, 25 on the other hand, guides the vertical movement between the base 20 and the perimeter wall.

As will be described below, it has been found that this arrangement, in which the floor 22 which is used to support gloves is stepped upwards and inwards with respect to that part of the base which makes a sliding fit of the base 20 within the sleeve 2, greatly reduces or eliminates the chances that any of the supported gloves will become caught or trapped between the movable base 20 and the perimeter wall 24, 25 of the sleeve 2.

The base floor 22 has a raised rim 50 substantially fully around an outer perimeter edge 51 of the floor. The rim is sized so that a main rectangular portion 52 of the packing plate 28 is located within the rim 50 when the packing plate is brought to bear against the base floor 22. The packing plate 28 has at one end of the central rectangular portion 52 a forwards extending tab 54, and at an opposite end a rearwards extending projection 55 with a handle 56 by which the packing plate may more easily be gripped and moved by hand. Both projections 54, 55 make a close sliding fit with the sleeve apertures 14, 15 when the packing place is first inserted into the packing receptacle 26, so that the packing plate is guided into location with the rim 50 of the base floor 22. The rim 50 has a pair of gaps 58, 59 that accommodate the packing plate projections 54, 55 so that the central rectangular portion 52 of the packing plate sits flush against the base floor 22.

Prior to inserting any gloves into the packing recess 26 the packing element 30 is placed directly on the central rectangular portion 52 of the packing plate 28. The packing element is a non-woven fabric or paper slip that has a main rectangular portion 60 the size of which matches that of the packing element rectangular portion 52, and also has a forwards extending tab 62 which covers over the forwards tab 54 of the packing plate 28.

Figures 3 to 9 illustrate how the apparatus may be used to efficiently pack a box 64 with disposable medical gloves 70. The box 64 may be formed from any suitable sheet-like material, for example, single layer cardboard, stiff paper, or plastic sheet material, but in this example is cardboard. After inserting the packing plate 28 and packing element 30 into the packing receptacle 26, either before or after moving the base 20 to a location a short distance beneath an upper edge 66 of the packing sleeve 2, gloves are aligned by hand and inserted into the receptacle 26, a lowermost glove 70 rests directly on the packing element 30. The base floor 22 should ideally be set at a level so that the most recently packed gloves are beneath but near the sleeve upper edge 66 so that the stack of gloves 100 is at all times contained and aligned by the interior wall surfaces 24, 25 of the packing sleeve 2.

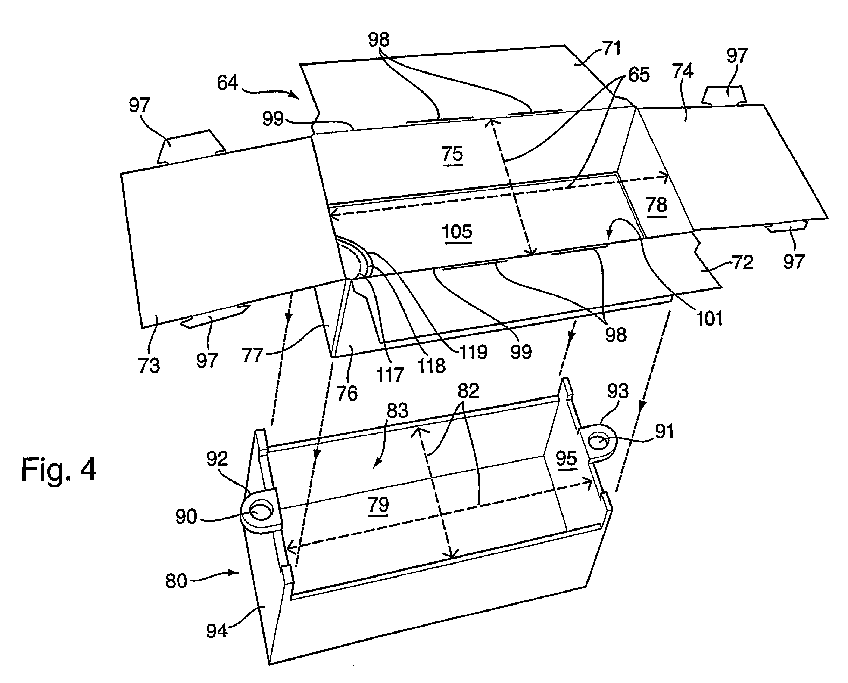

The apparatus preferably contains a stop mechanism (not shown) by which the downwards movement of the base 20 is set to a limit which corresponds to a desired vertical size of stack of gloves. When this is achieved, the stack of gloves 100 is ready for transfer into the cardboard box 64, shown in most detail in Figure 4. The box 64 is rectangular in a horizontal cross-section, and has a height which is equal to or less than its width. The box 64 has four flaps 71, 72, 73, 74 at the top edges of four corresponding sides 75, 76, 77, 78 of the box. The flaps are initially splayed outwards around a packing box opening 65.

The box 64 is first inserted into a box-like holder or carrier 80 which has an interior volume 79 that matches the shape of the packing box 64. The packing box carrier 80 has a substantially rectangular opening 82 that leads to a box-like receptacle 83 which receives and provides mechanical support to the packing box 64 during the packing process.

When the packing box 64 is seated in the packing box carrier 80, with the box flaps 71-74 splayed outwards, the packing box opening 65 is brought up against the upper edge 66 of the packing sleeve 2, so that the extending outer surface 84 of the packing sleeve nearest the upper edge 66 (see Figure 3) can slot into the packing box opening 65, as shown in Figure 5.

The lever arm 36 is then used to raise the base 20 and press the stack of gloves 100 up against the inside base of the packing box 64. As air is expelled from the stack of gloves 100, the front and rear packing plate projections 54, 55 come in to proximity with a pair of corresponding magnets 90, 91 situated on forwards and rearwards projection tabs 92, 93 that extend outwards in opposite directions from upper central portions of front and rear walls 94, 95 of the packing box carrier 80. As these projecting portions of the packing plate 28 are formed from steel, the packing plate becomes magnetically clamped to the packing box carrier.

During the upward motion of the stack of gloves 100, outer edges of the stack may drag against the perimeter walls 24, 25 and so be deflected downwards. An important feature of the invention is that the lowermost gloves on the stack are prevented from interfering with or becoming caught between the sliding base 20 and sleeve 2 by the clear gap 42 and overhang 46 above the sliding contact of the base platform 48 and peri meter walls 24, 25.

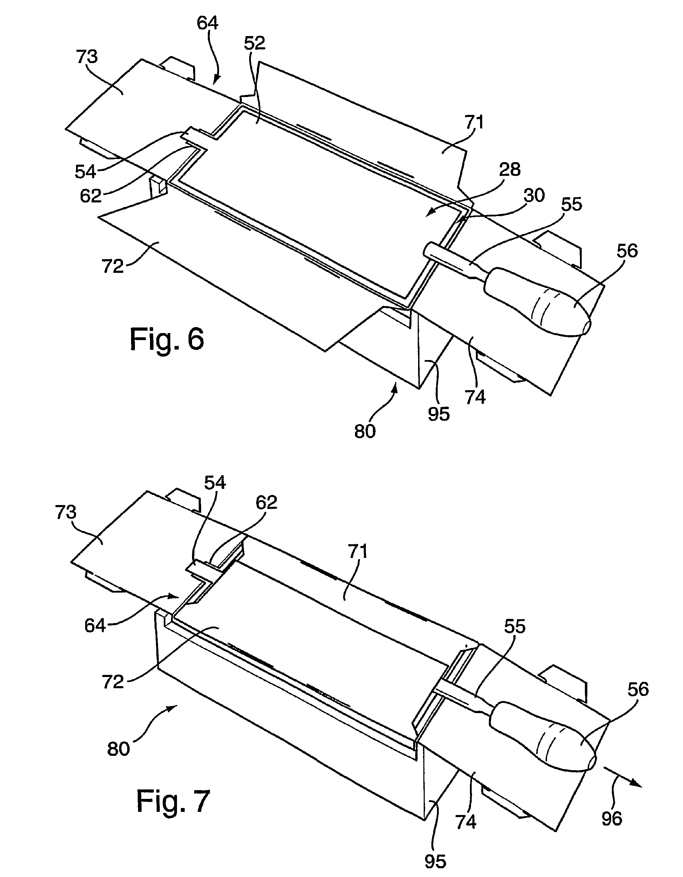

The packing operator can then lift the boxed gloves and surrounding assembly using the packing plate handle, and then invert this magnetically clamped assembly and place on a nearby working surface, as illustrated in Figure 6 to 9.

The first step in closing the box is to fold inwards the pair of flaps 71, 72 on the long sides 75, 76 of the packing box 64, as shown in Figure 7. Then, while holding these closed flaps 71, 72 in place, the packing plate handle 56 can be used to slide 96 the packing plate 28 horizontally away from the packing box carrier 80 and so disengage the magnetic clamp with the pair of magnets 90, 91.

The presence of the packing element 30 helps to isolate the sliding movement 96 of the packing plate 28 from the topmost glove 70 so that the stack of gloves 100 is in no way disrupted by the withdrawal of the packing plate.

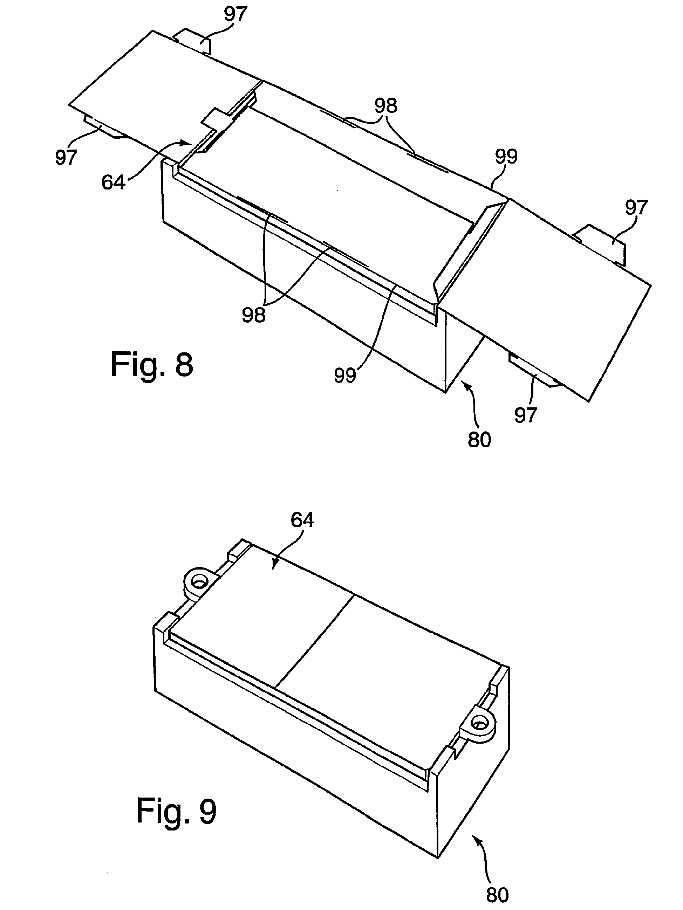

The packing element 30 is preferably then left in place while the remaining two end flaps 73, 74 are folded inwards. The end flaps 73, 74 each have a pair of side tabs 97 which engage with corresponding side slots 98 at a fold line 99 between the side flaps 71, 72 and the corresponding side panels 75, 76 of the packing box 64 when closed, as shown in Figure 9. The filled packing box 64 may then be removed from the packing box carrier 80.

It should be noted that gloves being packed could be folded in half, with cuffs facing the same way, or interfolded in half with cuffs facing in alternate directions. The interior dimensions of the sleeve 2 and packing box can be set accordingly, depending on the desired width and length of the stack of gloves, so that the packed gloves fit snugly within the packing box with minimal wasted packing volume.

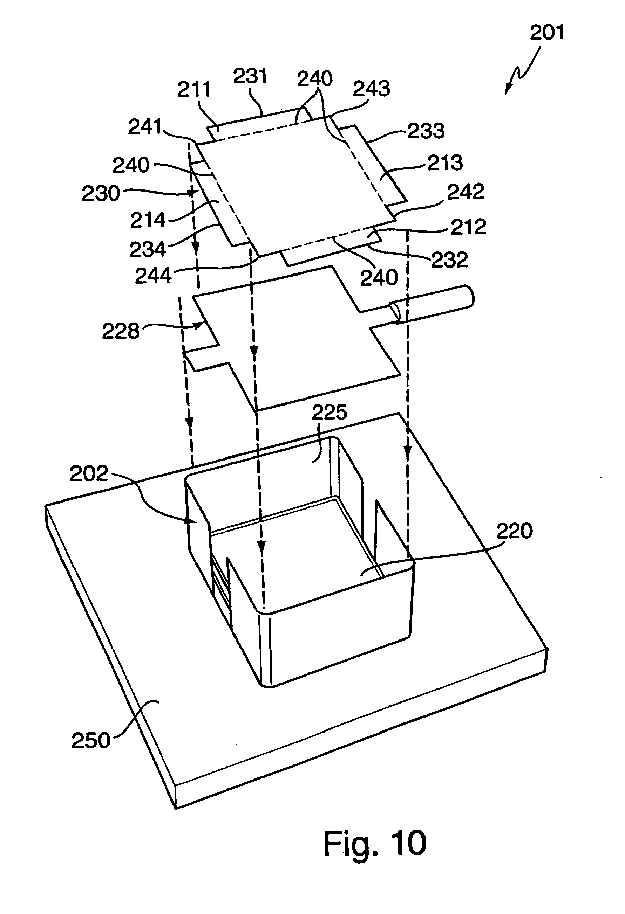

Figure 10 therefore shows in perspective a view from above and to one side of a glove packing apparatus 201 according to a second preferred embodiment of the invention. This differs from the first embodiment 1 in that the packing sleeve 202 and packing plate 228 all have a generally square outline for packing a similarly square box full of gloves. The packing element 230, which is again formed from a slip of paper having a lower coefficient of friction than the gloves to be packed. The packing element 230 differs in having a substantially square outline, but with four similar tabs 211-214 extending from each side 231-234 of the packing slip, except in the vicinity of the four corners 241-244 of the paper slip 230.

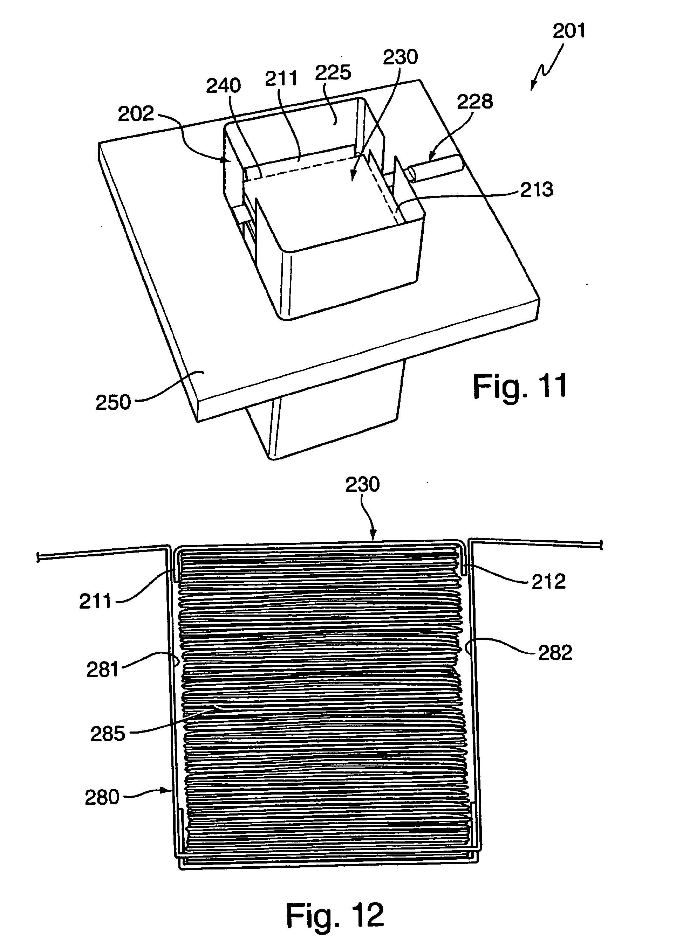

As shown in Figure 11, when the packing slip 230 is inserted into the packing sleeve 202, the tabs ride up interior walls 225 of the sleeve. To aid this, the tabs may be defined by a fold lines, indicated schematically by dashed lines 240, each of which extends between adjacent corners 241-244 of the slip. This covers over most of the gap between the walls 225 and the packing plate 228 or the floor 222 of the movable base 220, in order to prevent portions of gloves from becoming trapped in this gap when the floor 220 is raised in order to pack the gloves into a box, as described above.

The packing sleeve 202 is surrounded and partially set into a work surface 250, at a level where the packing plate 228 rests on the work surface as the packing sleeve is filled by hand or by machine with gloves.

The use of the packing plate 228 is similar to that described above. In this embodiment, however, the packing slip 230 is intended to remain in the packed box 280, as shown in Figure 12, where two of the four tabs 211, 212 are shown curved inwards down interior surfaces 281, 282 of the box 280. During packing of the box, the packing slip 230 therefore also provides some protection to a stack of gloves 285 within the box, by wrapping substantially over the stack of gloves.

The square outline box of Figure 12 has a width of 120 mm, a depth of 130 mm and a height of between 100 mm and 140 mm. In this example the height is 130 mm. The particular width, depth and height will, of course depend on a number of factors, such as the length of the gloves from finger tip to cuff, the thickness of the glove material, and the number of gloves to be packed inside each box.

The gloves in such a square outline arrangement will be over-folded, with the fingers of each glove being folded around the cuff of the preceding glove in the stack, relative to the order of dispensing from the stack. Although not illustrated, this arrangement lends itself to cuff-first dispensing from a dispensing aperture in the box 280, on an opposite side to that having the packing slip, with each glove pulled cuff-first from the dispensing aperture serving to pull the cuff of the next glove to be dispensed out of the dispensing aperture. In this way, each glove to be dispensed can be pulled cuff first from the dispensing aperture without having the user touching the finger portion of each dispensed glove.

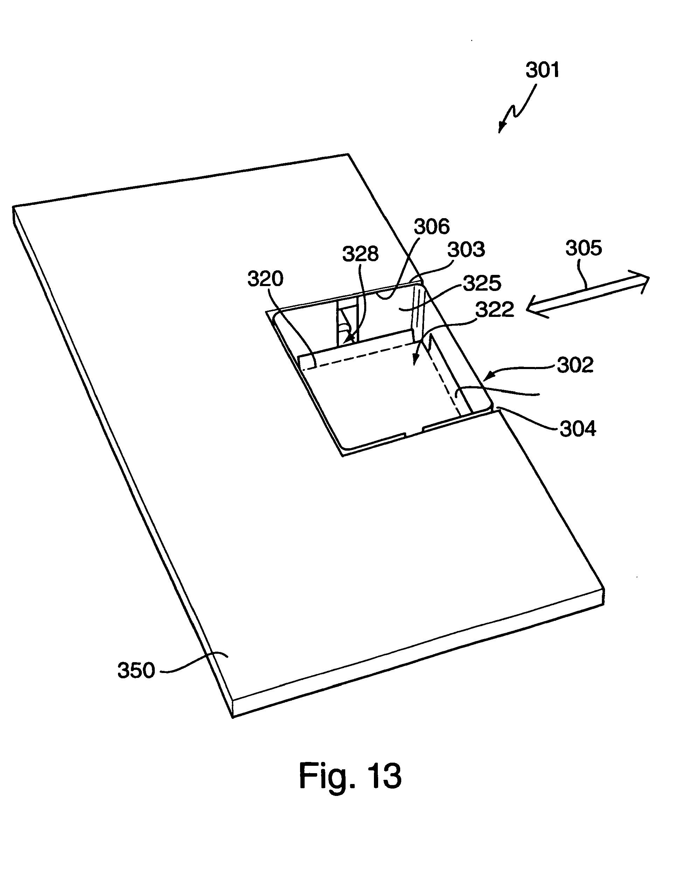

Figure 13 shows a glove packing apparatus according 301 to a third preferred embodiment of the invention, similar to that of the second embodiment 201, but having a square packing sleeve 302 that is slotted into a square recess 303 in a work surface 350. The recess 303 is open at one side 304 so that the packing sleeve 302 can be moved in and out of the recess 303 as indicated by an arrow labelled 305.

The work surface 350 may be supported at a convenient height for a worker by legs or other supports (not shown) and is therefore preferably fixed in place. The packing sleeve 302 is mobile, being mounted, for example, on a wheeled undercarriage (not shown) so that a worker can move the packing sleeve about as desired.

The packing sleeve has a top edge 306 that is the same height as that of the work surface 305. A worker may then gather and fold gloves (not shown) that have been piled on the work surface around the packing sleeve, and then lift or slide these gloves one at a time into the packing sleeve, building up a stack of interfolded gloves above a floor surface 322 of a movable floor 320 within the packing sleeve. Initially, the floor surface is close to but recessed just below the level of the packing sleeve top edge 306. As the stack of gloves is built up, the worker lowers the floor surface 322 so that the top of the stack of gloves does not extend above the level of the packing sleeve top edge 306. In this way, the gloves are aligned vertically by interior walls 325 of the sleeve as the stack is built up.

When sufficient gloves have been inserted into the packing sleeve 302, this is moved out of the recess 303 to a separate work station (not shown), where an empty box 280 in placed over the exposed top end of the packing sleeve, prior to compression of the gloves into the box by the movable floor 320, with the aid of a packing plate 328, followed by closing and sealing of the box as described above.

The reason that the packing process may be conveniently split into two separate stages at different work stations is that it is considerably quicker to pack the box with the stack of gloves than it is to fill the recess within the packing sleeve with a stack of interfolded gloves. Therefore, in a manual packing operation there may be several workers at different work stations responsible for filing packing sleeves with a stack of gloves for every one worker responsible for filling boxes with stacked gloves.

The division of such process steps in a production line having a mobile packing sleeve will also be suited to machine automation, in which a robotics system with computer vision is used to fold and pack gloves into the sleeve, prior to packing boxes with stacks of gloves contained in packing sleeves by a dedicated machine at a separate box packing station. In an automated system, gloves may be brought to the sleeve packing station by a conveyor belt. A glove flipper may be used in conjunction with the conveyor belt to orientate each glove correctly so that a robot arm can pick up each glove and deposit in the sleeve with the cuff and fingers correctly oriented. In such an automated system, the second stage of packing the boxes may be done manually with there being two or more automated sleeve packing stations for each manual box packing station.

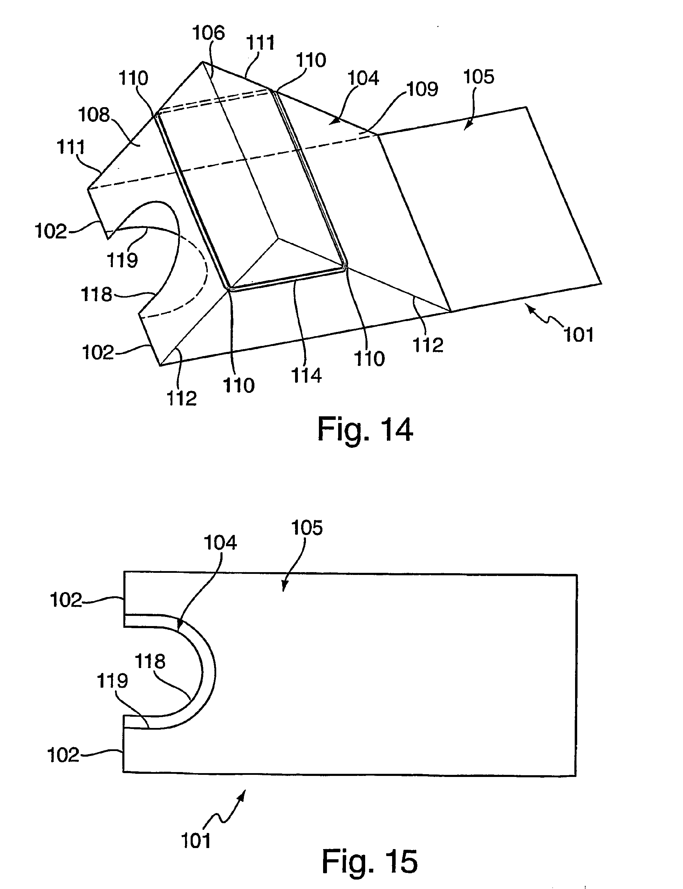

Figures 14 and 15 show a generally rectangular compression plate 101 which is inserted in the packing box 64 prior to filling the box with the stack of gloves 100. The compression plate 101 is formed from an elongate strip of cardboard material that has a primary transverse fold line 102 where the plate is folded back on itself so that the compression plate has an elongate upper member 104 and an elongate lower member 105. Another transverse fold line 106 crosses the upper member 104 midway along the length of this member, thereby dividing the upper member into the forwards segment 108, and a rearwards segment 109, each having an equal length in a direction along the length of the compression plate 101.

The forwards and rearwards segments 108, 109 each have at a portion of each segment closest to the fold line 106 in the upper member 104 a pair of notches 110 in side edges 111, 112 of the card material forming the upper member 104. An elastic band 114 is engaged with each notch 110, and when the upper member 104 is lying flat against the lower member 105, the elastic band is stretched so that the forwards and rearwards segments 108, 109 are being pulled together. The fold line 106 in the upper member 104 forms a hinge between the forwards and rearwards segments 108, 109.

As shown in Figure 4, the compression plate is inserted into the open packing box 64 with the lower member 105 facing towards the box opening 65. The box flaps 71 - 74 when closed form a base to the packing box when ready for use, the opposite side of the box having a semicircular tear away patch 117 which is removed prior to use in order to gain access to a cuff end 116 of the stack of gloves 100, so that gloves 70 may be dispensed cuff first from the packing box 64.

The compression plate has in both the upper and lower members 104, 105 similarly shaped, but larger semicircular cut outs 118, 119. The cut out 119 in the lower member 105 is larger than the cut out 118 in the upper member 104, which is larger than the tear away opening 117 in the packing box 64.

When a user opens the packing box 64 and begins to pull gloves 70 cuff first from the opening, the use may touch with his or her fingers the opening 117 in the box. The cut outs 118, 119 below, however, will be protected from potential contamination from a user by the box opening 117 which overhangs the cut outs below.

As gloves are dispensed, space opens up in the box. The elastic band 114 is under tension and able to flex the segments 108, 109 of the upper member 104 about the fold line 106 which therefore acts as a hinge to permit the elastic band to flex the upper member segments into a V-shape, as shown in Figure 13. The fold line 106 forms an apex to this V-shape and bears against top inner surface of the packing box 64, thereby pressing the lower member 105 of the compression plate 101 against the top of the remaining stack of gloves inside the box. As gloves are removed, the upper member segments continue to flex, thereby maintaining contact between the top of the stack of gloves and the upper member 105. In this way, the alignment of the stack of gloves within the box is maintained. This is important because the cuffs of the gloves 70 need to be near the box opening 117 to ensure reliable dispensing cuff first. Because users can pull out gloves by the cuffs, user contact with external surfaces of the gloves used in examination is prevented, thereby reducing the risk that microorganisms or other forms of contamination may be spread by use of the gloves.

As gloves are dispensed, the potential for contamination of the gloves is also reduced owing the overhanging box opening 117 and upper plate cut out 118, as these both protect the lower plate cut out 119, which remains in contact with the topmost glove in the stack of gloves, from any contamination.

The invention therefore provides a convenient way of packing gloves in a box container, and also an effective way of maintaining cleanliness during the dispensing of gloves.

## Claims

1. A glove packing apparatus (1, 201) for packing gloves (70) into a box (64), the apparatus comprising a receptacle (26) for forming a stack of said gloves (100, 285) to be packed, the receptacle having:
- a perimeter wall (24, 25) for containing said stack of gloves;
- a floor (22, 222) within the perimeter wall for supporting said stack of gloves; and
- an opening (27) opposite the floor into which additional gloves (70) may be added to said stack of gloves (100, 285);
**characterised in that** the floor is movable relative to the perimeter wall (24, 25), so that, in use:
- the floor (22, 222) may be moved relatively away from said opening (27) so that as gloves (70) are added to said stack of gloves, the perimeter wall continues to contain the stack of gloves; and
- the floor (22, 222) may be moved relatively toward said opening (27) to remove the stack of gloves (100, 285) from the receptacle (26).

2. A glove packing apparatus (1, 201) as claimed in Claim 1, in which the perimeter wall (24, 25) is fixed and the floor (22, 222) is movable towards and away from the opening (27).

3. A glove packing apparatus (1, 201) as claimed in any preceding claim, in which the receptacle (26) is inset with a surface (350) that extends around the opening (27).

4. A glove packing apparatus (1, 201) as claimed in any preceding claim, in which the floor (22, 222) is provided by a base (20, 220), and the base has a floor surface with a perimeter edge (51), said edge being separated by a clear gap (42) from the perimeter wall (24, 25).

5. A glove packing apparatus (1, 201) as claimed in Claim 4, in which the floor surface proximate said perimeter edge (51) extends above an overhang feature (44, 45, 46) in the base (20, 220).

6. A glove packing apparatus (1, 201) as claimed in Claim 4 or Claim 5, in which the base (20, 220) beneath said gap (42) contacts the perimeter wall (24, 25) to guide the relative movement between the base and the perimeter wall.

7. A glove packing apparatus (1, 201) as claimed in any preceding claim comprising additionally a box-like receptacle (80) for receiving a packing box (64) into which said stack of gloves (100, 285) is to be packed, the box-like receptacle having an opening (65) into which a packing box (64) may be inserted, and interior walls for holding a packing box once inserted into the opening (65).

8. A method of packing gloves in a box (64) using a glove packing apparatus (1, 201), the apparatus comprising a receptacle (26) having an opening (27) and a floor (22, 222) opposite and relatively movable with respect to the opening, the method comprising the steps of:
- inserting gloves (70) one or more at a time through the opening (27) and into the receptacle (26) to build a stack of gloves that are supported by the floor; **characterised in that** the method comprises the steps of
- moving the floor (22, 222) as necessary away from the opening so that the stack of gloves (100, 285) is contained by the receptacle (26);
- when the stack of gloves is complete, moving the floor relatively toward said opening (27) and transferring the stack of gloves (100, 285) into said box (64).

9. A method as claimed in Claim 8, in which the building of said stack is facilitated by first moving the floor (22, 222) towards the opening (27) to gain more ready access to the stack of gloves (100, 285) and then as gloves (70) are added to stack, moving the floor (22, 222) away from the opening (27) so that the stack of gloves is contained by the receptacle (26).

10. A method as claimed in Claim 8 or Claim 9, comprising the steps of orienting an open end (65) of said box (64) over the opening (27) to the receptacle (26) and then moving the floor (22, 222) to move the stack of gloves (100, 285) through said open end into the box (64).

11. A method as claimed in Claim 10, in which the method comprises, as the stack of gloves is moved into the open end (65) of the box (64), the step of pressing the stack of gloves (100, 285) up against an inside base of the box (64) in order to expel air from the stack of gloves and thereby reduce the packing volume of boxed gloves.

12. A method as claimed in Claim 10 or 11, comprising the step of removing the box (64) with stack of gloves (100, 285) from the opening (27) to the receptacle (26), and closing the open end (65) of the box (64).

13. A method as claimed in any of Claims 8 to 12, the apparatus (1, 201) comprising additionally a packing plate (28, 228), the packing plate having an extending member (55, 56), the method comprising the steps of:
- prior to inserting of any gloves (70) through the opening (27), placing the packing plate on the movable floor (22, 222), with the extending member (55, 56) extending externally of the receptacle (26); and
- when the stack of gloves (100, 285) is ready to be transferred to said box (64), using the extending member (55, 56) to help transfer said stack of gloves (100, 285) into said box (64).

14. A method as claimed in Claim 13, when dependent from Claim 12, in which the open box (64) has one or more flaps (71, 72, 73, 74) that are moved to close the open end (65) of the box (64), the method comprising the steps of:
- closing at least one flap (71, 72, 73, 74) while leaving the packing plate (28, 228) in place with respect to said stack of gloves (100, 285); and
- after said at least one flap has been closed, removing the packing plate from the stack of gloves.

15. A method as claimed in Claim 14, in which the apparatus comprises additionally a packing element (30, 230), the packing element having a lower coefficient of friction than the gloves (70) to be packed, the method comprising the step of using said packing element (30, 230) to cover the packing plate (28, 228) prior to inserting of any gloves (70) through the opening (27), and then inserting gloves one or more at a time through the opening and into the receptacle (26) to build a stack of gloves that rests on the packing element.

16. A method as claimed in Claim 14, in which the apparatus comprises additionally a packing element (30, 230), the method comprising the step of using said packing element to cover the packing plate (28, 228) prior to inserting of any gloves (70) through the opening (27), and then inserting gloves one or more at a time through the opening and into the receptacle (26) to build a stack of gloves (100, 285) that rests on the packing element (30, 230), each packing element covering the movable floor (22, 222) and a gap (42) between the floor and adjacent walls (24, 25) to prevent gloves (70) from becoming trapped between the floor (22, 222) and adjacent walls.

## Patentansprüche

1. Handschuh-Packvorrichtung (1, 201) zum Packen von Handschuhen (70) in eine Schachtel (64), wobei die Vorrichtung einen Behälter (26) zum Formen eines Stapels der zu packenden Handschuhe (100, 285) enthält, wobei der Behälter aufweist:
- eine Umfangswand (24, 25), um den Stapel von Handschuhen zu umfassen;
- einen Boden (22, 222) innerhalb der Umfangswand zum Tragen des Stapels von Handschuhen; und
- eine Öffnung (27) gegenüber dem Boden, in die zusätzliche Handschuhe (70) zum Stapel von Handschuhen (100, 285) hinzugefügt werden können;
**dadurch gekennzeichnet, dass** der Boden bezüglich der Umfangswand (24, 25) beweglich ist, damit im Betrieb:
- der Boden (22, 222) von der Öffnung (27) weg bewegt werden kann, damit, wenn Handschuhe (70) zum Stapel von Handschuhen hinzugefügt werden, die Umfangswand weiter den Stapel von Handschuhen umfasst; und
- der Boden (22, 222) zur Öffnung (27) hin bewegt werden kann, um den Stapel von Handschuhen (100, 285) aus dem Behälter (26) zu entfernen.

2. Handschuh-Packvorrichtung (1, 201) nach Anspruch 1, bei der die Umfangswand (24, 25) ortsfest und der Boden (22, 222) zur Öffnung (27) hin und von ihr weg beweglich ist.

3. Handschuh-Packvorrichtung (1, 201) nach einem der vorhergehenden Ansprüche, bei der in den Behälter (26) eine Fläche (350) eingelassen ist, die sich um die Öffnung (27) erstreckt.

4. Handschuh-Packvorrichtung (1, 201) nach einem der vorhergehenden Ansprüche, bei der der Boden (22, 222) von einer Grundplatte (20, 220) geliefert wird, und die Grundplatte eine Bodenfläche mit einem Umfangsrand (51) hat, wobei der Rand durch einen lichten Spalt (42) von der Umfangswand (24, 25) getrennt ist.

5. Handschuh-Packvorrichtung (1, 201) nach Anspruch 4, bei der die Bodenfläche nahe dem Umfangsrand (51) sich über einer Überhangeinrichtung (44, 45, 46) in der Grundplatte (20, 220) erstreckt.

6. Handschuh-Packvorrichtung (1, 201) nach Anspruch 4 oder Anspruch 5, bei der die Grundplatte (20, 220) unter dem Spalt (42) die Umfangswand (24, 25) kontaktiert, um die relative Bewegung zwischen der Grundplatte und der Umfangswand zu führen.

7. Handschuh-Packvorrichtung (1, 201) nach einem der vorhergehenden Ansprüche, die zusätzlich einen schachtelartigen Behälter (80) zur Aufnahme einer Packschachtel (64) aufweist, in die der Stapel von Handschuhen (100, 285) gepackt werden soll, wobei der schachtelartige Behälter eine Öffnung (65), in die eine Packschachtel (64) eingeführt werden kann, und Innenwände zum Halt einer Packschachtel hat, wenn sie in die Öffnung (65) eingeführt ist.

8. Verfahren zum Packen von Handschuhen in eine Schachtel (64) unter Verwendung einer Handschuh-Packvorrichtung (1, 201), wobei die Vorrichtung einen Behälter (26) mit einer Öffnung (27) und einem Boden (22, 222) enthält, der der Öffnung gegenüberliegt und in Bezug auf sie beweglich ist, wobei das Verfahren die folgenden Schritte aufweist:
- Einführen von Handschuhen (70) einzeln oder mehrere gleichzeitig durch die Öffnung (27) und in den Behälter (26), um einen Stapel von Handschuhen aufzubauen, die vom Boden getragen werden;
**dadurch gekennzeichnet, dass** das Verfahren die folgenden Schritte aufweist:
- Bewegen des Bodens (22, 222) nach Bedarf weg von der Öffnung, damit der Stapel von Handschuhen (100, 285) vom Behälter (26) umfasst wird;
- wenn der Stapel von Handschuhen vollständig ist, Bewegen des Bodens zur Öffnung (27) und Übertragen des Stapels von Handschuhen (100, 285) in die Schachtel (64).

9. Verfahren nach Anspruch 8, bei dem der Aufbau des Stapels dadurch vereinfacht wird, dass erst der Boden (22, 222) zur Öffnung (27) bewegt wird, um einen besseren Zugang zum Stapel von Handschuhen (100, 285) zu erhalten, und dann, wenn Handschuhe (70) zum Stapel hinzugefügt werden, der Boden (22, 222) von der Öffnung (27) weg bewegt wird, damit der Stapel von Handschuhen vom Behälter (26) umfasst wird.

10. Verfahren nach Anspruch 8 oder 9, das die Schritte des Ausrichtens eines offenen Endes (65) der Schachtel (64) über die Öffnung (27) zum Behälter (26) und dann des Bewegens des Bodens (22, 222) aufweist, um den Stapel von Handschuhen (100, 285) durch das offene Ende in die Schachtel (64) zu bewegen.

11. Verfahren nach Anspruch 10, wobei das Verfahren, wenn der Stapel von Handschuhen in das offene Ende (65) der Schachtel (64) bewegt wird, den Schritt des Drückens des Stapels von Handschuhen (100, 285) nach oben gegen eine innere Grundplatte der Schachtel (64) aufweist, um Luft aus dem Stapel von Handschuhen auszustoßen und dadurch das Packvolumen der eingeschachtelten Handschuhe zu verringern.

12. Verfahren nach Anspruch 10 oder 11, das den Schritt des Entfernens der Schachtel (64) mit dem Stapel von Handschuhen (100, 285) von der Öffnung (27) zum Behälter (26) und des Schließens des offenen Endes (65) der Schachtel (64) enthält.

13. Verfahren nach einem der Ansprüche 8 bis 12, wobei die Vorrichtung (1, 201) zusätzlich eine Packplatte (28, 228) aufweist, wobei die Packplatte ein Verlängerungselement (55, 56) aufweist, wobei das Verfahren die folgenden Schritte aufweist:
- vor dem Einführen irgendwelcher Handschuhe (70) durch die Öffnung (27), Anordnen der Packplatte auf dem beweglichen Boden (22, 222), wobei das Verlängerungselement (55, 56) außerhalb des Behälters (26) vorsteht; und
- wenn der Stapel von Handschuhen (100, 285) bereit ist, in die Schachtel (64) übertragen zu werden, Verwenden des Verlängerungselements (55, 56), um die Übertragung des Stapels von Handschuhen (100, 285) in die Schachtel (64) zu unterstützen.

14. Verfahren nach Anspruch 13, wenn er von Anspruch 12 abhängt, bei dem die offene Schachtel (64) eine oder mehrere Verschlussklappen (71, 72, 73, 74) hat, die bewegt werden, um das offene Ende (65) der Schachtel (64) zu schließen, wobei das Verfahren die folgenden Schritte aufweist:
- Schließen mindestens einer Verschlussklappe (71, 72, 73, 74), während die Packplatte (28, 228) bezüglich des Stapels von Handschuhen (100, 285) in Stellung gelassen wird; und
- nachdem die mindestens eine Verschlussklappe geschlossen wurde, Entfernen der Packplatte vom Stapel von Handschuhen.

15. Verfahren nach Anspruch 14, bei dem die Vorrichtung zusätzlich ein Packelement (30, 230) aufweist, wobei das Packelement einen geringeren Reibungskoeffizient hat als die zu packenden Handschuhe (70), wobei das Verfahren den Schritt der Verwendung des Packelements (30, 230) aufweist, um die Packplatte (28, 228) vor der Einführung irgendwelcher Handschuhe (70) durch die Öffnung (27) zu bedecken, und dann Handschuhe einzeln oder mehrere gleichzeitig durch die Öffnung und in den Behälter (26) einzuführen, um einen Stapel von Handschuhen zu bilden, der auf dem Packelement ruht.

16. Verfahren nach Anspruch 14, bei dem die Vorrichtung zusätzlich ein Packelement (30, 230) aufweist, wobei das Verfahren den Schritt der Verwendung des Packelements, um die Packplatte (28, 228) vor dem Einführen irgendwelcher Handschuhe (70) durch die Öffnung (27) zu bedecken, und dann des Einführens von Handschuhen einzeln oder mehrere gleichzeitig durch die Öffnung und in den Behälter (26) aufweist, um einen Stapel von Handschuhen (100, 285) zu bilden, der auf dem Packelement (30, 230) ruht, wobei jedes Packelement den beweglichen Boden (22, 222) und einen Spalt (42) zwischen dem Boden und benachbarten Wänden (24, 25) bedeckt, um zu verhindern, dass Handschuhe (70) zwischen dem Boden (22, 222) und benachbarten Wänden eingeklemmt werden.

## Revendications

1. Appareil d'emballage de gants (1, 201) pour emballer des gants (70) dans une boîte (64), l'appareil comprenant un réceptacle (26) pour former une pile desdits gants (100, 285) destinés à être emballés, le réceptacle comportant :
- une paroi périmétrique (24, 25) pour contenir ladite pile de gants ;
- un plancher (22, 222) à l'intérieur de la paroi périmétrique pour supporter ladite pile de gants, et
- une ouverture (27), opposée au plancher, dans laquelle des gants supplémentaires (70) peuvent être ajoutés à ladite pile de gants (100, 285) ; **caractérisé en ce que** le plancher est mobile par rapport à la paroi périmétrique (24, 25), pour que, durant l'utilisation :
- le plancher (22, 222) puisse être éloigné relativement de ladite ouverture (27) pour que, lorsque des gants (70) sont ajoutés à ladite pile de gants, la paroi périmétrique continue de contenir la pile de gants ; et
- le plancher (22, 222) puisse être rapproché relativement de ladite ouverture (27) pour ôter la pile de gants (100, 285) du réceptacle (26).

2. Appareil d'emballage de gants (1, 201) selon la revendication 1, dans lequel la paroi périmétrique (24, 25) est fixe et le plancher (22, 222) est mobile pour se rapprocher et s'éloigner de l'ouverture (27).

3. Appareil d'emballage de gants (1, 201) selon une quelconque revendication précédente, dans lequel une surface (350), qui s'étend autour de l'ouverture (27), est incorporée dans le réceptacle (26).

4. Appareil d'emballage de gants (1, 201) selon une quelconque revendication précédente, dans lequel le plancher (22, 222) est prévu par une base (20, 220), et la base comporte une surface de plancher avec un bord périmétrique (51), ledit bord étant séparé, par un espace libre (42), de la paroi périmétrique (24, 25).

5. Appareil d'emballage de gants (1, 201) selon la revendication 4, dans lequel la surface de plancher à proximité dudit bord périmétrique (51) s'étend au-dessus d'un élément de porte-à-faux (44, 45, 46) dans la base (20, 220).

6. Appareil d'emballage de gants (1, 201) selon la revendication 4 ou la revendication 5, dans lequel la base (20, 220), en dessous dudit espace (42), entre en contact avec la paroi périmétrique (24, 25) pour guider le mouvement relatif entre la base et la paroi périmétrique.

7. Appareil d'emballage de gants (1, 201) selon une quelconque revendication précédente, comprenant en outre un réceptacle en forme de boîte (80) pour recevoir une boîte d'emballage (64), dans laquelle ladite pile de gants (100, 285) est destinée à être emballée, le réceptacle en forme de boîte comportant une ouverture (65), dans laquelle une boîte d'emballage (64) peut être insérée, et des parois intérieures pour contenir une boîte d'emballage, une fois insérée dans l'ouverture (65).

8. Procédé d'emballage de gants dans une boîte (64) utilisant un appareil d'emballage de gants (1, 201), l'appareil comprenant un réceptacle (26) comportant une ouverture (27) et un plancher (22, 222), opposé et relativement mobile par rapport à l'ouverture, le procédé comprenant l'étape consistant à :
- insérer des gants (70), un ou plusieurs à la fois, à travers l'ouverture (27) et dans le réceptacle (26) pour créer une pile de gants qui sont supportés par le plancher ; **caractérisé en ce que** le procédé comprend les étapes consistant à :
- éloigner le plancher (22, 222), selon la nécessité, de l'ouverture, pour que la pile de gants (100, 285) soit contenue par le réceptacle (26) ;
- lorsque la pile de gants est achevée, rapprocher le plancher relativement de ladite ouverture (27) et transférer la pile de gants (100, 285) dans ladite boîte (64).

9. Procédé selon la revendication 8, dans lequel la création de ladite pile est facilitée en rapprochant d'abord le plancher (22, 222) de l'ouverture (27) pour obtenir un accès plus facile à la pile de gants (100, 285) et puis, lorsque des gants (70) sont ajoutés à pile, en éloignant le plancher (22, 222) de l'ouverture (27) pour que la pile de gants soit contenue par le réceptacle (26).

10. Procédé selon la revendication 8 ou la revendication 9, comprenant les étapes consistant à orienter une extrémité ouverte (65) de ladite boîte (64) par-dessus l'ouverture (27) du réceptacle (26) et puis déplacer le plancher (22, 222) pour déplacer la pile de gants (100, 285) à travers ladite extrémité ouverte dans la boîte (64).

11. Procédé selon la revendication 10, dans lequel le procédé comprend, lorsque la pile de gants est déplacée dans l'extrémité ouverte (65) de la boîte (64), l'étape consistant à comprimer la pile de gants (100, 285) vers le haut contre une base intérieure de la boîte (64) afin d'expulser de l'air à partir de la pile de gants et ainsi réduire le volume d'emballage de gants emballés.

12. Procédé selon la revendication 10 ou 11, comprenant les étapes consistant à ôter la boîte (64), avec la pile de gants (100, 285), de l'ouverture (27) du réceptacle (26), et fermer l'extrémité ouverte (65) de la boîte (64).

13. Procédé selon une quelconque des revendications 8 à 12, l'appareil (1, 201) comprenant en outre une plaque d'emballage (28, 228), la plaque d'emballage comportant un élément d'extension (55, 56), le procédé comprenant les étapes consistant à :
- avant d'insérer de quelconques gants (70) à travers l'ouverture (27), placer la plaque d'emballage sur le plancher mobile (22, 222), l'élément d'extension (55, 56) s'étendant extérieurement du réceptacle (26) ; et
- lorsque la pile de gants (100, 285) est prête à être transférée à ladite boîte (64), utiliser l'élément d'extension (55, 56) pour aider le transfert de ladite pile de gants (100, 285) dans ladite boîte (64).

14. Procédé selon la revendication 13, lorsqu'elle dépend de la revendication 12, dans lequel la boîte ouverte (64) comporte un ou plusieurs rabats (71, 72, 73, 74) qui sont déplacés pour fermer l'extrémité ouverte (65) de la boîte (64), le procédé comprenant les étapes consistant à :
- fermer au moins un rabat (71, 72, 73, 74) tout en laissant la plaque d'emballage (28, 228) en place par rapport à ladite pile de gants (100, 285) ; et
- après que ledit au moins un rabat a été fermé, ôter la plaque d'emballage de la pile de gants.

15. Procédé selon la revendication 14, dans lequel l'appareil comprend en outre un élément d'emballage (30, 230), l'élément d'emballage comportant un coefficient de frottement inférieur à celui des gants (70) destinés à être emballés, le procédé comprenant les étapes consistant à utiliser ledit élément d'emballage (30, 230) pour recouvrir la plaque d'emballage (28, 228) avant d'insérer de quelconques gants (70) à travers l'ouverture (27), et puis insérer des gants, un ou plusieurs à la fois, à travers l'ouverture et dans le réceptacle (26) pour créer une pile de gants qui repose sur l'élément d'emballage.

16. Procédé selon la revendication 14, dans lequel l'appareil comprend en outre un élément d'emballage (30, 230), le procédé comprenant les étapes consistant à utiliser ledit élément d'emballage pour recouvrir la plaque d'emballage (28, 228) avant d'insérer de quelconques gants (70) à travers l'ouverture (27), et puis insérer des gants, un ou plusieurs à la fois, à travers l'ouverture et dans le réceptacle (26) pour créer une pile de gants (100, 285) qui repose sur l'élément d'emballage (30, 230), chaque élément d'emballage recouvrant le plancher mobile (22, 222) et un espace (42) entre le plancher et des parois adjacentes (24, 25) pour empêcher des gants (70) d'être coincés entre le plancher (22, 222) et les parois adjacentes.
